# EUROPÄISCHE PATENTSCHRIFT

(11) **EP 0 998 377 B1**
(45) Veröffentlichungstag und Bekanntmachung des Hinweises auf die Patenterteilung: **29.01.2003**
(21) Anmeldenummer: 98940216.9
(22) Anmeldetag: 13.07.1998
(51) Int. Cl.: B25J 15/02

(54) **GREIFVORRICHTUNG**
GRIPPING DEVICE
DISPOSITIF DE PREHENSION

(30) Priorität: 12.07.1997 DE 19729942
(43) Veröffentlichungstag der Anmeldung: 10.05.2000
(73) Patentinhaber: Schunk GmbH & Co. KG Fabrik für Spann- und Greifwerkzeuge, 74348 Lauffen (DE)
(72) Erfinder: SCHNEIDER, Michael, D-74360 Ilsfeld (DE)
(74) Vertreter: Friz, Oliver
(86) Internationale Anmeldenummer: EP9804334
(87) Internationale Veröffentlichungsnummer: WO99002314

(56) Entgegenhaltungen:
- DE-A- 4 037 883
- DE-A- 19 523 229
- US-A- 4 610 475
- US-A- 4 666 198
- US-A- 5 372 124

## Beschreibung

Die Erfindung betrifft eine Greifvorrichtung mit zwei piezoelektrisch gesteuert aufeinander zu bzw. voneinander weg bewegbaren Greiferfingern gemäß oberbegriff des Anspruchs 1. Eine derartige greifvorrichtung ist aus der US-A-5 372 154 bekannt.

Eine Greifvorrichtung ist auch aus dem US-Patent 4,610,475 bekannt. Bei dieser Greifvorrichtung erstrecken sich entlang der Greiferfinger piezoelektrische Materialien, welche eine Verbiegung der Greiferfinger für die Durchführung des Greifvorgangs bewirken.

Desweiteren ist aus der DE 40 37 883 A1 eine Greifvorrichtung bekannt, die eine scherenartige Zangenanordnung zur Bildung der Greiferfinger aufweist, welche durch eine nicht näher beschriebene Verstelleinrichtung derart betätigt wird, dass die Zangenschenkel ein Werkstück greifen können. Einer der Greiferfinger weist im Bereich der Werkstückanlage einen piezoelektrischen Aktor auf, der mit einer druckempfindlichen Abtasteinrichtung in Form eines piezoelektrischen Elements am anderen Greiferfinger zusammenwirkt, um über eine Steuer- bzw. Regeleinrichtung eine vorgewählte Greiferkraft am Werkstück zu erreichen.

Aus der DE-A-195 23 229 ist ein Mikrogreifer für die Mikromontage bekannt, dessen Greiferfinger über elastische Biegegelenke und über einen Piezotranslator auf einem Substrat befestigt sind. Durch Längenänderung des Piezotranslators verformen sich die elastischen Biegegelenke und leiten die Bewegung auf die Greiferfinger weiter. Die Reproduzierbarkeit ist aufgrund der elastischen Biegegelenke schlecht.

Piezoelektrisch gesteuerte Greifvorrichtungen weisen auch das Problem auf, dass die durch Anlegen einer Spannung und damit einhergehender Deformation erreichbare Kraft mit zunehmender Deformation bis gegen Null abnimmt. Die zur Verfügung stehende Auslenkbarkeit der Greiferfinger bei der Greifvorrichtung nach dem US-Patent 4,610,475 ist begrenzt und nur durch die Geometrie der Greiferfinger bzw. des daran befestigten piezoelektrischen Materials bestimmbar. Die Reproduzierbarkeit der Greifcharakteristik ist aufgrund des Biegens der Greiferfinger schlecht. Es besteht auch die Gefahr, dass bei "negativer Biegung" des piezokeramischen Materials der Greiferfinger ein Bruch bewirkt und der Greiferfinger zerstört wird, da das piezokeramische Material sehr spröde und bruchanfällig ist.

Hiervon ausgehend liegt der vorliegenden Erfindung die Aufgabe zugrunde, eine Greifvorrichtung der eingangs genannten Art zu schaffen, die eine bessere Reproduzierbarkeit der Greifcharakteristik gewährleistet sowie eine universellere Einsetzbarkeit erlaubt und für Beschädigungen weniger anfällig ist.

Diese Aufgabe wird durch eine Greifvorrichtung nach Anspruch 1

Es wird darauf hingewiesen, dass auch mehr als zwei Greiferfinger vorgesehen werden können. Das Stellmittel kann auf mehrere Greiferfinger oder nur auf einen der Greiferfinger einwirken.

Mit der Erfindung wird also vorgeschlagen, anstelle eines aus biegsamem Material bestehenden Greiferfingers, einen starren Greiferfinger vorzusehen, der um einen Drehpunkt schwenkbar angelenkt ist. Die Verschwenkung wenigstens eines der Greiferfinger erfolgt dann durch das hiervon separate piezoelektrische Stellmittel. Hierdurch kann die Reproduzierbarkeit der Greifcharakteristik verbessert werden, da es im wesentlichen zu keinen Biegebeanspruchungen der Greiferfinger zur Ausführung des Greifvorgangs kommt. Soll die Greifcharakteristik geänderten Werkstücken oder Bedingungen angepasst werden, so muss nicht eine andere Greifvorrichtung verwendet werden oder die Greiferfinger gegen andere ausgewechselt werden, sondern es kann dies in vorteilhafter Weise durch eine Veränderung bzw. Anpassung der Einwirkung des piezoelektrischen Stellmittels über das Zwischenstück auf den oder die Greiferfinger bewirkt werden. Hierfür kann das Zwischenstück verstellbar und dadurch die Greifcharakteristik und die Greiferwinkelvoreinstellung veränderbar sein. Durch Verstellen dieses Zwischenstücks, insbesondere eines einschraubbaren Gewindestifts, kann die Greifcharakteristik eingestellt werden.

Durch die Loslösung des Stellmittels bzw. des piezoelektrischen Materials von den Greiferfingern, besteht nicht mehr die Gefahr, dass das spröde piezokeramische Material infolge Überdehnung durch Einwirkung auf die Greiferfinger zerstört wird.

Nach einer bevorzugten Ausführungsform steht ein jeweiliger Greiferfinger von einem schwenkbar am Gehäuse angelenkten Basiskörper vor, der seinerseits von dem Stellmittel verschwenkbar ist.

Durch die Anordnung des das Werkstück greifenden Abschnitts des Greiferfingers und des Krafteinleitungspunkts des Stellmittels jeweils in Bezug auf den Drehpunkt des Greiferfingers lässt sich unter Berücksichtigung des Hebelgesetzes eine Kraftreduzierung oder -erhöhung erreichen (Verhältnis Kraftarm : Lastarm). Die erfindungsgemäße Greifvorrichtung umfasst ein zwischen Stellmittel und Greiferfinger wirkendes Zwischenstück, welches an einem gehäusefesten Bauteil schwenkbar angelenkt ist und dadurch ein Kraftübertragungsverhältnis der Stellkraft des Stellmittels zu der Greifkraft des Greiferfingers definiert.

Vorzugsweise ist das Stellmittel auf der vom Greiferfinger abgewandten Seite des Basiskörpers in einem Gehäuseinnenraum vorgesehen.

Der wenigstens eine schwenkbare Greiferfinger ist vorzugsweise in Öffnungsrichtung vorgespannt. Dies erweist sich als vorteilhaft, da ein piezoelektrisches Material eine Kraftübertragung nur in einer Richtung bewirken kann.

Um zu verhindern, dass das piezoelektrische Material durch eingeleitete Kräfte durch den Greiferfinger beschädigt wird, ist eine Endstellung des Greiferfingers mittels eines verstellbaren Anschlags einstellbar.

Bei einer weiteren bevorzugten Ausführungsform der Erfindung ist das eingangs erwähnte Zwischenstück, über welches das Stellmittel gegen die Greiferfinger oder einen Basiskörper der Greiferfinger anlegbar ist, ein in den Basiskörper einsetzbarer Stift. Dieser Stift ist am Basiskörper vorzugsweise verstellbar, beispielsweise in eine Gewindeöffnung einschraubbar. Er kann gleichzeitig zum Einstellen bzw. Verstellen des Greiferwinkels im Ausgangszustand dienen.

Um den zur Verfügung stehenden Greifweg zu vergrößern, sind die Greiferfinger miteinander gekoppelt, so dass beide Greiferfinger eine Schwenk- bzw. Greifbewegung ausführen, wobei nur einer der Greiferfinger piezogesteuert ausgelenkt zu werden braucht. Diese Kopplung bewirkt zugleich eine Synchronisation der Greifbewegung der Greiferfinger.

Das ein piezoelektrisches Material umfassende Stellmittel weist vorzugsweise mehrere piezoelektrische Aktoren auf, die miteinander derart gekoppelt werden können, dass sich ihre Stellkräfte oder Stellwege addieren.

Weitere Merkmale, Einzelheiten und Vorteile der Erfindung ergeben sich aus der zeichnerischen Darstellung und nachfolgenden Beschreibung zweier bevorzugten Ausführungsformen einer erfindungsgemäßen Greifvorrichtung. In der Zeichnung zeigt:
- Figur 1: eine perspektivische Ansicht einer erfindungsgemäßen Greifvorrichtung;
- Figur 2: eine stirnseitige Ansicht der Greifvorrichtung nach Figur 1;
- Figur 3: einen Längsschnitt mit durch die Pfeile A-A bezeichneter Schnittebene;
- Figur 4: eine perspektivische Ansicht einer weiteren Ausführungsform einer erfindungsgemäßen Greifvorrichtung;
- Figur 5: eine stirnseitige Ansicht der Greifvorrichtung nach Figur 4;
- Figur 6: einen Längsschnitt mit durch die Pfeile A-A in Figur 5 bezeichneter Schnittebene;
- Figur 7: eine Draufsicht auf die Greifvorrichtung nach Figur 4 ;
- Figur 8: eine Ansicht der Greifvorrichtung nach Figur 4 von unten;
- Figur 9: eine schematische Darstellung von Anordnungen von Biegeaktoren;
- Figur 10: eine perspektivische Ansicht einer nicht erfindungsgemäßen Greifvorrichtung;
- Figur 11: eine Draufsicht auf die Greifvorrichtung nach Figur 10;
- Figur 12: einen Längsschnitt mit durch die Pfeile A-A in Figur 11 bezeichneter Schnittebene; und
- Figur 13: einen Längsschnitt mit durch die Pfeile B-B in Figur 11 bezeichneter Schnittebene.

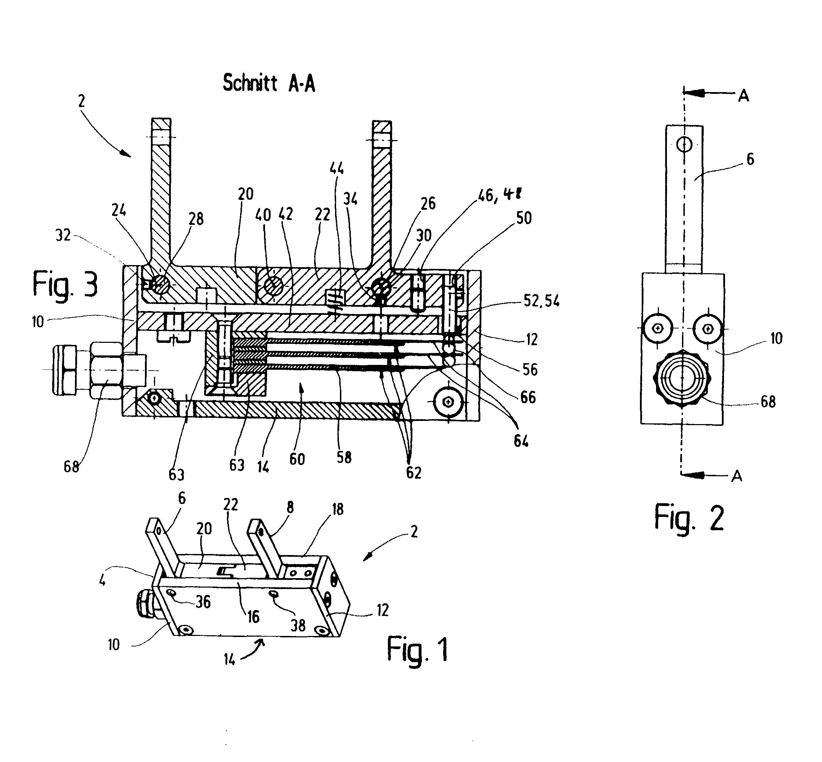

Die Figuren 1 bis 3 zeigen eine insgesamt mit dem Bezugszeichen 2 bezeichnete Greifvorrichtung, die einen Gehäusegrundkörper 4 sowie zwei aufeinander zu bzw. voneinander weg schwenkbare Greiferfinger 6, 8 aufweist. Der Gehäusegrundkörper 4 umfasst zwei parallele Stirnseitenwände 10, 12, eine Bodenwand 14 sowie zwei Längsseitenwände 16, 18, in denen die beiden Greiferfinger 6, 8 begrenzt schwenkbar gelagert sind. Die Greiferfinger 6, 8 erstrecken sich senkrecht von einem jeweiligen Basiskörper 20, 22 weg, die den Gehäusegrundkörper 4 nach oben hin abschließen. Die Basiskörper 20, 22 weisen am Ausgangspunkt der Greiferfinger 6, 8 eine Durchgangsöffnung 24, 26 auf, durch welche ein Schwenkbolzen 28, 30 hindurchgesteckt und über einen Gewindestift 32, 34, der quer zur Durchgangsöffnung 24, 26 in diese einschraubbar ist, geklemmt wird. Die freien Enden des jeweiligen Schwenkbolzens 28, 30 greifen durch jeweilige Lageröffnungen 36, 38 in den Längsseitenwänden 16, 18 hindurch und sind dort schwenkbar am Gehäusegrundkörper 4 gelagert. Die Basiskörper 20, 22 sind im Bereich ihrer einander zugewandten Endabschnitte über eine gelenkige Drehverbindung 40 derart in Längsrichtung miteinander gekoppelt, dass bei einer Auslenkung bzw. Verschwenkung des einen Greiferfingers 6, 8 der andere Greiferfinger 8, 6 synchron aber gegenläufig verschwenkt wird. Innerhalb des Gehäusegrundkörpers 4 erstreckt sich unterhalb der Basiskörper 20, 22 und in einem Abstand hierzu eine Zwischenwand 42. Zwischen dem Greiferfinger 8 und der Zwischenwand 42 ist eine die Greiferfinger 6, 8 in Öffnungsrichtung vorspannende Druckfeder 44 vorgesehen, die unverlierbar in einer zylindrischen Bohrung auf der der Zwischenwand 42 zugewandten Seite des Basiskörpers 22 gehaltert ist.

Der Basiskörper 22 weist auf der von der gelenkigen Verbindung 40 gegenüberliegenden Seite des Schwenkbolzens 30 eine Durchgangsöffnung 46 auf, die in den Zwischenraum zwischen dem Basiskörper 22 und der Zwischenwand 42 mündet. In diese Öffnung 46 ist ein als Anschlag dienender Gewindebolzen 48 derart einschraubbar, dass er mit seiner der Zwischenwand 42 zugewandten Stirnseite in den Zwischenraum hineinragen und den Basiskörper 22 gegen die Zwischenwand 42 abstützen kann. Der Gewindebolzen 48 bildet daher einen die Endstellung des Greiferfingers 8 definierenden verstellbaren Endanschlag.

Der Basiskörper 22 weist eine weitere Durchgangsöffnung 50 auf, die bezüglich des Schwenkstifts 30 auf derselben Seite jedoch weiter am Ende vorgesehen ist als die Durchgangsöffnung 46. In diese Durchgangsöffnung 50 ist ein als verstellbares Zwischenstück 52 wirkender Gewindestift 54 eingeschraubt, der eine mit der Durchgangsöffnung 50 fluchtende Durchgangsöffnung 56 in der Zwischenwand 42 durchgreift und über den eine den Basiskörper 22 bzw. den Greiferfinger 4 verschwenkende Kraft in den Basiskörper 22 eingeleitet wird.

Innerhalb des Gehäusegrundkörpers 4 in dem Raum zwischen der Zwischenwand 42 und der Bodenwand 14 ist ein ein piezoelektrisches Material 58 umfassendes insgesamt mit dem Bezugszeichen 60 bezeichnetes Stellmittel untergebracht. Dieses Stellmittel 60 umfasst drei piezoelektrische Biegeaktoren 62, die jeweils einen Träger 64 umfassen, auf denen das piezoelektrische Material 58 aufgebracht ist. Diese piezoelektrischen Biegeaktoren 62 sind einenends mittels eines Klemm- und Gegenklemmstücks 63 gehalten und derart übereinander und mit Abstand zueinander gestapelt, dass sie sich bei Anlegen einer entsprechenden elektrischen Spannung infolge der Längung des piezoelektrischen Materials 58 in der Zeichnungsebene der Figur 1 auslenken bzw. biegen. Die freien Enden der piezoelektrischen Biegeaktoren 62 sind über angedeutete stiftförmige Kopplungsmittel 66 miteinander verbunden. Der Träger 64 des der Zwischenwand 42 am nächsten liegenden piezoelektrischen Biegeaktors 62 berührt die Stirnseite des in den Raum unterhalb der Zwischenwand 42 hineinragenden Gewindestifts 54. Bei einer Auslenkung der piezoelektrischen Biegeaktoren 62 drückt dieser Träger 64 unterstützt durch die auslenkenden Kräfte der beiden anderen Biegeaktoren 62, die über die Kopplungsmittel 66 übertragen werden, auf den Gewindestift 54 und verschwenkt den Basiskörper 42 um die Achse des Schwenkstifts 30. Diese den Basiskörper 22 bzw. den Greiferfinger 8 verschwenkende Bewegung wird über die gelenkige Verbindung 40 der Greiferfinger bzw. Basiskörper synchron auf den Basiskörper 20 bzw. den Greiferfinger 6 übertragen, so dass die Greiferfinger 6, 8 zum Ausführen einer Greif- oder Schließbewegung aufeinander zu verschwenkt werden. Wird die an die piezoelektrischen Aktoren 62 angelegte Spannung wieder abgeschaltet, so bewegen sich die Aktoren 62 in die in Figur 1 dargestellte Stellung und die Greiferfinger 6, 8 werden durch die Wirkung der Druckfeder 44 in ihre in Figur 1 dargestellte Ausgangsstellung bewegt.

Die elektrischen Anschlüsse zur Ansteuerung der piezoelektrischen Aktoren 62 sind über eine PG-Verschraubung 68 in einer der Stirnseitenwände 4 ins Innere des Gehäusegrundkörpers 40 geführt.

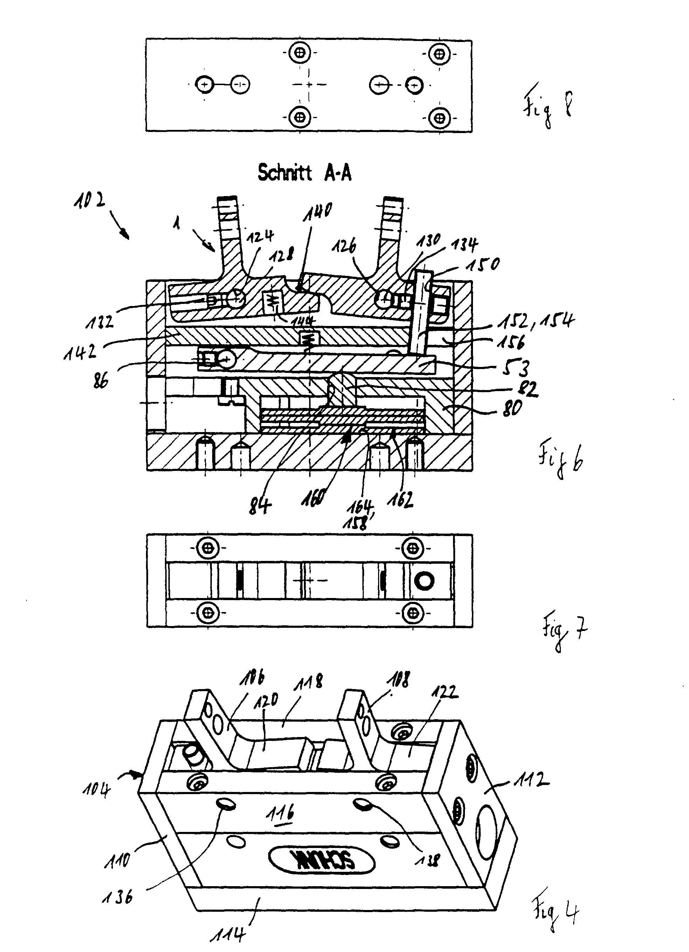

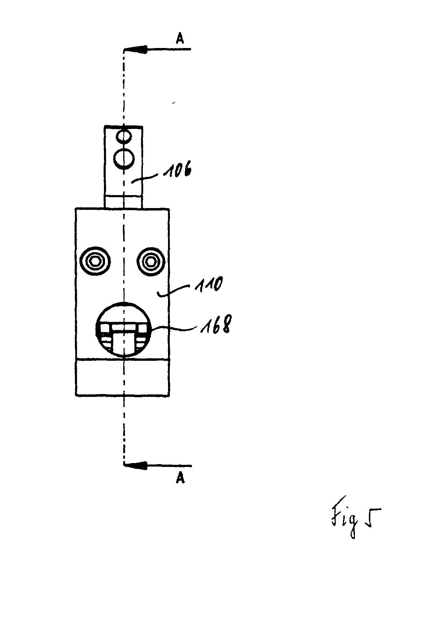

Die Figuren 4 bis 8 zeigen eine weitere Ausführungsform einer erfindungsgemäßen Greifvorrichtung 102, deren der vorausgehend beschriebenen Greifvorrichtung entsprechende Teile mit entsprechenden Bezugszeichen beginnend mit 102 bezeichnet sind und die gleiche Funktion ausüben. Die Greifvorrichtung 102 unterscheidet sich von der vorstehend beschriebenen dadurch, dass anstelle der gelenkigen, jedoch mit Spiel versehenen Drehverbindung 40 zwischen den Basiskörpern eine durch entsprechende Formgebung von gegeneinander abwälzenden Abschnitten der Basiskörper 120 und 122 gebildete Kopplung 140 vorgesehen ist, durch welche die Greiferfinger 106, 108 zwangsgeführt und synchron zueinander bewegt werden.

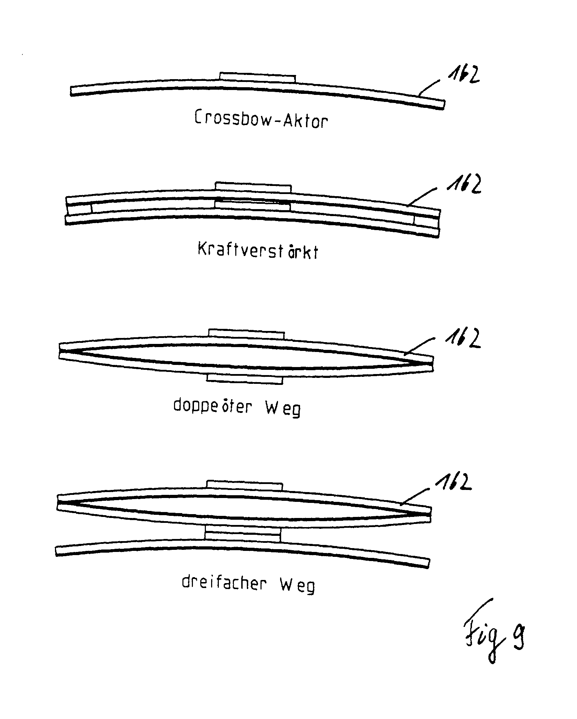

Zum Einstellen des Greiferwinkels in der Ausgangsstellung und damit der Greifcharakteristik bzw. des Greiferwegs dient in entsprechender Weise als verstellbares Zwischenstück 152 ein von außerhalb zugänglicher Gewindestift 154. Auf diesen Gewindestift 154 wirken jedoch nicht wie beim vorstehenden Ausführungsbeispiel das von den Greiferfingern separate Stellmittel 60 unmittelbar ein, sondern es ist ein weiteres Zwischenstück 53 vorgesehen, welches unterhalb der Zwischenwand 142 schwenkbar an den Längsseitenwänden 116 und 118 angeordnet ist, wobei die Schwenkachse parallel zu den Schwenkbolzen 128 und 130 der Greiferfinger 106, 108 verläuft. Dieses weitere Zwischenstück 53 ist in einem Raum zwischen der Zwischenwand 142 und einem einen Aufnahmeraum für das Stellmittel 160 bildenden Wandbauteil 80 untergebracht. Das Stellmittel 160 umfaßt wiederum drei piezoelektrische Biegeaktoren 162 mit einem streifenförmigen Träger 164 und einem darauf aufgebrachten piezoelektrischen Material 158. Bei Anlegen einer elektrischen Spannung dehnt sich das auf den Träger aufgebrachte piezoelektrische Material 158 derart aus, dass die drei Aktoren 162 die in der Figur 9 unten schematisch dargestellte Gestalt einnehmen und dadurch eine Stellbewegung ausführen. Die drei Aktoren 162 sind dabei derart angeordnet, dass sich bei Ansteuerung des piezoelektrischen Materials ihre jeweiligen Stellwege addieren. Es wäre indessen auch möglich, zwei, drei oder mehrere Biegeaktoren 162 so anzuordnen, dass sich ihre Stellkräfte addieren, solchenfalls wären die Biegeaktoren relativ zueinander so angeordnet, dass sich bei elektrischer Ansteuerung für alle Aktoren eine Krümmung nach derselben Seite ergibt. Es wäre auch denkbar und könnte sich für bestimmte Anwendungsfälle als vorteilhaft erweisen, wenn die beiden vorstehend erläuterten Anordnungsvarianten der Biegeaktoren miteinander kombiniert würden, um einerseits eine möglichst hohe Stellkraft und andererseits einen möglichst hohen Stellweg zu erreichen. Der dem Zwischenstück 53 am nächsten liegende Biegeaktor 162 trägt einen als Druckpilz dienenden stiftförmigen Ansatz 82, der sich durch eine Öffnung 84 in dem Bauteil 80 hindurcherstreckt und das schwenkbar angelenkte Zwischenstück 53 berührt. Wenn die Biegeaktoren 162 eine Stellbewegung durchführen, so drückt der Ansatz 82 gegen das schwenkbar angelenkte Zwischenstück 53. Durch den Abstand des Krafteinwirkungspunkts zum Drehpunkt 86 des Zwischenstücks 53 und durch den Abstand des Berührungspunkts des Gewindestifts 154 zum Drehpunkt 86 des Zwischenstücks wird ein Kraftübertragungsverhältnis definiert, mit dem das Stellmittel 160 auf die Greiferfinger 106, 108 einwirkt. Durch die Länge des am Zwischenstück 53 gebildeten Kraftarms bzw. Lastarms kann ein bestimmtes Kraftübertragungsverhältnis bei der Auslegung der Greifvorrichtung vorgegeben werden.

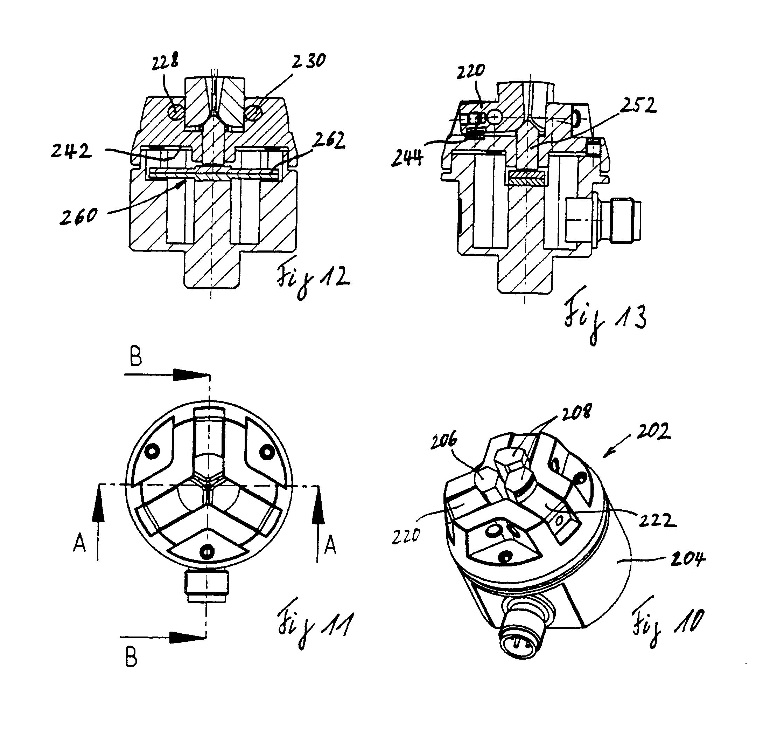

Die Figuren 10 bis 13 zeigen eine Greifvorrichtung, die nicht unter den Schutzumfang der Ansprüche fällt, bei der es sich um einen Dreifingergreifer, vorzugsweise zum Greifen von CDs handelt. Diejenigen Teile, welche dieselben Funktionen ausüben, wie bei den beiden vorausgehenden Ausführungsformen, tragen dieselben Bezugszeichen. Es sind Stellmittel 260 in Form zweier piezoelektrischer Biegeaktoren 262 vorgesehen. Bei elektrischer Ansteuerung der Biegeaktoren 262 wird das Zwischenstück 252, welches eine Art Druckpilz bildet, nach oben bewegt und verschwenkt die Greiferfinger 206, 208 um ihre Schwenkbolzen 228, 230. Durch diese Stellbewegung können die Greiferfinger, indem sie sich radial weiten, nachdem sie in die zentrale Öffnung einer CD eingeführt wurden, diese CD halten.

## Patentansprüche

1. Greifvorrichtung mit zwei piezoelektrisch gesteuert aufeinander zu bzw. voneinander weg bewegbaren Greiferfingern (6, 8, 106, 108), wobei die Greiferfinger (6, 8, 106, 108) im wesentlichen starr ausgebildet sind und wenigstens einer der Greiferfinger (8, 108) zum Ausführen des Greifvorgangs schwenkbar angelenkt und auf den anderen zu bzw. von diesem weg schwenkbar ist und wobei ein Stellmittel (60, 160) in Form eines Biegeaktors (62, 162) aus einem streifenförmigen Träger (64, 164) und aus einem darauf aufgebrachten sich bei Anlegen einer elektrischen Spannung längenden piezoelektrischen Material (58, 158) vorgesehen ist, und das Stellmittel (60, 160) als von den Greiferfingern (6, 8, 106, 108) separates und von diesen beabstandetes Teil angeordnet ist und über ein Zwischenstück (52, 152, 53) eine Verschwenkung des schwenkbaren Greiferfingers (6, 8, 106, 108) bewirkt, dadurch gekenngeichnet, daß der wenigstens eine schwenkbare Greiferfinger (8, 108) durch ein Federmittel (44, 144) gegen das Stellmittel (60, 160) vorgespannt ist und während der Greiferstellbewegung unter Zwischenordnung des Zwischenstücks (52, 152, 53) dauerhaft gegen dieses anliegt, und wobei die Lage des Zwischenstücks (52, 152, 53) relativ zu dem schwenkbaren Greiferfinger (8, 108) verstellbar und dadurch eine Greiferwinkelvoreinstellung veränderbar vorgegeben werden kann.

2. Greifvorrichtung nach Anspruch 1, **dadurch gekennzeichnet, dass** wenigstens ein Greiferfinger (8, 108) von einem schwenkbar am Gehäuse (4, 104) angelenkten Basiskörper (20, 22, 120, 122) vorsteht, der von dem Stellmittel (60, 160) verschwenkbar ist.

3. Greifvorrichtung nach Anspruch 2, **dadurch gekennzeichnet, dass** der Greiferfinger (8, 108) im wesentlichen senkrecht vom Basiskörper (22, 122) vorsteht.

4. Greifvorrichtung nach Anspruch 2 oder 3, **dadurch gekennzeichnet, dass** das Stellmittel (60, 160) auf der vom Greiferfinger (8, 108) abgewandten Seite des Basiskörpers (22, 122) vorgesehen ist.

5. Greifvorrichtung nach einem oder mehreren der vorstehenden Ansprüche, **dadurch gekennzeichnet, dass** der Krafteinleitungspunkt von dem Stellmittel (60, 160) auf den Greiferfinger in Bezug auf den Schwenkpunkt (30, 130) des Greiferfingers (8, 108) derart angeordnet ist, dass sich an dem ein Werkstück greifenden Abschnitt des Greiferfingers (8, 108) eine gegenüber der Krafteinleitung durch das Stellmittel (60, 160) erhöhte oder reduzierte Greifkraft ergibt.

6. Greifvorrichtung nach einem oder mehreren der vorstehenden Ansprüche **gekennzeichnet durch** ein zwischen Stellmittel (160) und Greiferfinger (108) wirkendes Zwischenstück (53), welches' an einem gehäusefesten Bauteil (116, 118) schwenkbar angelenkt ist und **dadurch** ein Kraftübertragungsverhältnis der Stellkraft des Stellmittels (160) zu der Greifkraft des Greiferfingers (108) definiert.

7. Greifvorrichtung nach einem der vorstehenden Ansprüche, **dadurch gekennzeichnet, dass** das Stellmittel (60, 160) im Innern eines Gehäuses (4, 104) angeordnet ist.

8. Greifvorrichtung nach einem der vorstehenden Ansprüche, **dadurch gekennzeichnet, dass** eine Endstellung des Greiferfingers (8, 108) mittels eines verstellbaren Anschlags (48) einstellbar ist.

9. Greifvorrichtung nach einem der Ansprüche 2 bis 8, **dadurch gekennzeichnet, dass** das Zwischenstück (52, 152, 53) ein in den Basiskörper (22, 122) einsetzbarer Stift (54, 154) ist.

10. Greifvorrichtung nach Anspruch 9, **dadurch gekennzeichnet, dass** der Stift (54, 154) am Basiskörper (22, 122) verstellbar, insbesondere einschraubbar ist.

11. Greifvorrichtung nach einem der vorstehenden Ansprüche, **dadurch gekennzeichnet, dass** beide Greiferfinger (6, 8, 106, 108) miteinander gekoppelt sind, so dass beide Greiferfinger eine Schwenk- bzw. Greifbewegung ausführen, wobei nur einer der Greiferfinger piezogesteuert ausgelenkt zu werden braucht.

12. Greifvorrichtung nach einem der vorstehenden Ansprüche, **dadurch gekennzeichnet, dass** das Stellmittel (60, 160) mehrere piezoelektrische Biegeaktoren (62, 162) umfasst, die derart miteinander koppelbar sind, dass sich ihre Stellkräfte addieren.

## Claims

1. Gripper device with two piezo-electrically controlled gripper fingers (6, 8, 106, 108) which can be moved towards or away from one another, wherein the gripper fingers (6, 8, 106, 108) are essentially designed to be rigid, and in order to execute the gripping procedure, at least one of the gripper fingers (8, 108) is coupled in a hinged manner, and can be tilted towards or away from the other one, and wherein an adjusting element (60, 160) in the form of a flectional actuator (62, 162) of a strip-shaped carrier (64, 164) and a piezoelectrical material (58, 158) which is applied onto it and which elongates when an electrical voltage is applied, and the adjusting element (60, 160) is arranged as a part which is separate from the gripper fingers (6, 8, 106, 108) and distanced from them, and which via an intermediate piece (52, 152, 53) causes the tilting gripper finger (6, 8, 106, 108) to tilt,
**characterised in that**
the at least one tilting gripper finger (8, 108) is pre-stressed against the adjusting element (60, 160) by a spring element (44, 144), and during the gripper adujustment movement, with the intermediate piece (52, 152, 53) being interposed, rests firmly against it, and wherein the position of the intermediate piece (52, 152, 53) relative to the tilting gripper finger (8, 108) can be adjusted, and thereby a gripper angle preliminary setting can be specified, such that it can be altered.

2. Gripper device in accordance with claim 1, **characterised in that** at least one gripper finger (8, 108) projects from a base body (20, 22, 120, 122) which is coupled to the housing (4, 104) in a hinged manner, and which can be tilted by the adjusting element (60, 160).

3. Gripper device in accordance with claim 2, **characterised in that** the gripper finger (8, 108) essentially projects from the base body (22, 122) in a perpendicular manner.

4. Gripper device in accordance with claim 2 or 3, **characterised in that** the adjusting element (60, 160) is provided on that side of the base body (22, 122) facing away from the gripper finger (8, 108).

5. Gripper device in accordance with one or more of the above claims,
**characterised in that** force introduction point from the adjusting element (60, 160) onto the gripper finger in relation to the hinge point (30, 130) of the gripper finger (8, 108) is arranged in such a way that on that section of the gripper finger (8, 108) that grips a work piece, the gripping force that results is increased or reduced compared with the force introduction through the adjusting element (60, 160).

6. Gripper device in accordance with one or more of the above claims,
**characterised by** an intermediate piece (53) which acts between the adjusting element (60, 160) and gripper finger (108) and which is coupled in a hinged manner on a component (116, 118) that is firmly fixed to the housing, and which thereby defines a force transmission ratio of the actuating force of the adjusting element (160) to the gripping force of the gripper finger (108).

7. Gripper device in accordance with one of the preceding claims, **characterised in that** the adjusting element (60, 160) is arranged in the interior of a housing (4, 104).

8. Gripper device in accordance with one of the preceding claims, **characterised in that** an end position of the gripper finger (8, 108) can be set by means of an adjustable limit stop (48).

9. Gripper device in accordance with one of the claims 2 to 8, **characterised in that** the intermediate piece (52, 152, 53) is a pin (54, 154) that can be inserted into the base body (22, 122).

10. Gripper device in accordance with claim 9, **characterised in that** the pin (54, 154) is adjustable on the base body (22, 122), in particular that it can be screwed in.

11. Gripper device in accordance with one of the preceding claims, **characterised in that** both gripper fingers (6, 8, 106, 108) are coupled to one another, so that both gripper fingers execute a tilting or gripping movement, wherein only one of the gripper fingers needs to be swung out in a piezo-controlled manner.

12. Gripper device in accordance with one of the preceding claims, **characterised in that** the adjusting element (60, 160) comprises several piezo-electric flectional actuators (62, 162) which can be coupled to one another in such a way that their actuating forces add together.

## Revendications

1. Dispositif de préhension, comportant deux doigts de préhension (6, 8, 106, 108), qui sont commandés de manière piézoélectrique et qui peuvent être déplacés en se rapprochant ou en s'éloignant l'un de l'autre, dans lequel les doigts de préhension (6, 8, 106, 108) sont conformés de manière essentiellement rigide et au moins un des doigts de préhension (8, 108) est articulé à pivotement pour réaliser le processus de préhension et peut pivoter en se rapprochant ou en s'éloignant de l'autre doigt de préhension et dans lequel est prévu un moyen de réglage (60, 160) qui est sous la forme d'un élément à flexion (62, 162) constitué d'un support en forme de bande (64, 164) et d'un matériau piézoélectrique (58, 158) qui est déposé sur le support et qui s'allonge lors de l'application d'une tension électrique, et le moyen de réglage (60, 160) est disposé sous la forme d'une partie séparée des doigts de préhension (6, 8, 106, 108) et située à distance de ces derniers et agit pour réaliser, par l'intermédiaire d'une pièce intermédiaire (52, 152, 53), un pivotement du doigt de préhension (6, 8, 106, 108) qui peut pivoter, **caractérisé en ce que** le, au moins un, doigt de préhension (8, 108) est soumis à une tension préalable en direction du moyen de réglage (60, 160) au moyen d'un élément à ressort (44, 144) et repose en permanence sur la pièce intermédiaire (52, 152, 53) pendant le mouvement de réglage de la préhension avec interposition de cette dernière et **en ce que** la position de la pièce intermédiaire (52, 152, 53) par rapport au doigt pouvant pivoter (8, 108) est réglable et que, de ce fait, on peut prédéterminer de manière variable un réglage préalable de l'angle de préhension.

2. Dispositif de préhension selon la revendication 1, **caractérisé en ce qu'**au moins un doigt de préhension (8, 108) fait saillie d'un corps de base (20, 22, 120, 122) qui est articulé à pivotement sur le châssis (4, 104) et qui peut pivoter sous l'effet du moyen de réglage (60, 160).

3. Dispositif de préhension selon la revendication 2, **caractérisé en ce que** le doigt de préhension (8, 108) fait saillie essentiellement perpendiculairement du corps de base (22, 122).

4. Dispositif de préhension selon la revendication 2 ou 3, **caractérisé en ce que** le moyen de réglage (60, 160) est prévu sur la face du corps de base (22, 122) qui est opposée au doigt de préhension (8, 108).

5. Dispositif de préhension selon l'une quelconque ou plusieurs des revendications précédentes, **caractérisé en ce que** le point d'introduction de la force allant du moyen de réglage (60, 160) au doigt de préhension est disposé de telle manière par rapport au point de pivotement (30, 130) du doigt de préhension (8, 108) qu'une section du doigt de préhension (8, 108) qui s'accroche sur une pièce à usiner, fournit une force de préhension qui est augmentée ou réduite par rapport à l'introduction de la force par le moyen de réglage (60, 160).

6. Dispositif de préhension selon l'une quelconque ou plusieurs des revendications précédentes, **caractérisé par** une pièce intermédiaire (53) qui agit entre le moyen de réglage (160) et le doigt de préhension (108), qui est articulée sur un élément (116, 118) solidaire du châssis et qui définit, de ce fait, un rapport de transmission de force de la force de réglage du moyen de réglage (160) à la force de préhension du doigt de préhension (108).

7. Dispositif de préhension selon l'une quelconque des revendications précédentes, **caractérisé en ce que** le moyen de réglage (60, 160) est disposé à l'intérieur d'un châssis (4, 104).

8. Dispositif de préhension selon l'une quelconque des revendications précédentes, **caractérisé en ce qu'**une position finale du doigt de préhension (8, 108) peut être réglée au moyen d'une butée réglable (48).

9. Dispositif de préhension selon l'une quelconque des revendications 2 à 8, **caractérisé en ce que** la pièce intermédiaire (52, 152, 53) est une tige (54, 154) qui peut être introduite dans le corps de base (22, 122).

10. Dispositif de préhension selon la revendication 9, **caractérisé en ce que** la tige (54, 154) est montée de manière réglable sur le corps de base (22, 122), en particulier par vissage.

11. Dispositif de préhension selon l'une quelconque des revendications précédentes, **caractérisé en ce que** les deux doigts de préhension (6, 8, 106, 108) sont couplés l'un avec l'autre de telle sorte que les deux doigts de préhension réalisent un mouvement de pivotement et de préhension, tout en ne nécessitant l'articulation à commande piézoélectrique que pour un des doigts de préhension.

12. Dispositif de préhension selon l'une quelconque des revendications précédentes, **caractérisé en ce que** le moyen de réglage (60, 160) comprend plusieurs éléments à flexion piézoélectriques (62, 162) qui peuvent être couplés entre eux de telle manière que leurs forces de réglage s'additionnent.
